# EUROPEAN PATENT SPECIFICATION

(11) **EP 4 411 310 B1**
(45) Date of publication and mention of the grant of the patent: **02.09.2026**
(21) Application number: 23154214.3
(22) Date of filing: 31.01.2023
(51) Int. Cl.: F41G 7/22, F41G 3/02, G01S 13/00, G01S 13/87, G01S 13/88

(54) **A METHOD FOR A COOPERATIVE OPERATING OF A RADAR SEEKER WITH FIRE CONTROL RADARS**
VERFAHREN ZUM KOOPERATIVEN BETRIEB EINES RADARSUCHERS MIT FEUERSTEUERUNGSRADAREN
PROCÉDÉ POUR LE FONCTIONNEMENT COOPÉRATIF D'UN CHERCHEUR RADAR AVEC DES RADARS DE LUTTE CONTRE L'INCENDIE

(43) Date of publication of application: 07.08.2024
(73) Proprietor: HENSOLDT Sensors GmbH, 82024 Taufkirchen (DE)
(72) Inventor: LÖHNER, Andreas, 89231 Neu-Ulm (DE); DÜRR, André, 88480 Achstetten (DE)
(74) Representative: LifeTech IP Spies & Behrndt Patentanwälte PartG mbB

(56) References cited:
- US-A- 3 137 850
- US-A- 4 338 602
- US-B1- 8 698 058

## Description

The present invention relates to a method for a cooperative operating of a radar seeker with Fire Control Radars and, in particular, to a method of operating a cooperative radar sensor system and a radar sensor for the cooperative radar sensor system and to a multi-static radar seeker or fire control radar for an improved target engagement.

### BACKGROUND

The guidance of interceptors needs a high target detection performance and a high tracking accuracy. This is especially important in time-critical scenarios such as for hypersonic threats. For example, US 8 698 058 B1 discloses a seeker apparatus for a missile. US 3 137 850 A discloses a system for synchronization and range measurement with a plurality of guided missiles. US 4 338 602 A discloses an air-to-ground tracking and guidance system.

Conventional systems are not yet able to provide the needed detection performance and target classification as well as the desired target tracking accuracy. In particular, for hypersonic threats an effective combating in time in an electromagnetic cluster environment is needed.

### SUMMARY OF THE INVENTION

At least some of the above-mentioned problems are overcome by a method according to claim 1, a radar sensor according to claim 7, an air vehicle according to claim 9 and a missile according to claim 10.

The present invention relates to a method for operating a cooperative radar sensor system with at least one illumination air vehicle and at least one missile. The at least one missile is configured to follow a trajectory to combat a target. Each of the at least one illumination air vehicle and the at least one missile comprises a respective radar sensor. The method comprises the steps of:
- controlling one or more of the radar sensors to perform bistatic or multi-static radar measurements;
- evaluating, based on the radar measurements, for a reference point and the target the following: a range, a (relative or absolute) velocity, an azimuth angle, an elevation angle, a position, wherein the reference point is a location of one of the radar sensors or a fixed point;
- determining, based on the evaluation, a collision point of the missile and the target; and
- controlling the missile to the collision point to hit the target at the collision point.

It is understood that the steps may be carried out by different control units or data processing units. For example, the evaluation and/or controlling the radar sensors may be performed by an internal control unit of the radar sensor. The steps of determining the collision point and/or controlling the missile may be carried out by a flight controller or a mission controller.

It is further understood that each of the radar sensors can be a respective radar sensor of the sensor system and that the azimuth and the elevation are defined by angles in respective planes. The reference point may be an origin of the utilized coordinate system. Furthermore, the (desired) trajectory of the missile may form a straight line (i.e. shortest line) or a curved line. The determined collision point may also depend on the moving state of the missile. The moving state may be determined by a (desired) velocity or an achievable upper velocity of the missile. The determined collision point may depend on whether the missile shall move along a straight line or a curved line. When a curved line is used, the target may be hit from a side where the cross section is larger so that the target can easier to hit. Moreover, the determined collision point may be updated/renewed so that changes in the moving state of the target can be taken into account. The determination of the collision point may also include a determination of a flight path or trajectory (straight or curved) to the collision point.

Since the target can move with a hypersonic velocity, advantageously, the missile is not guided to target itself (although this is not excluded), but to the determined (future) collision point. An advantage of a guiding to the collision point (instead of following the target) is that the time and distance to this collision point may be shorter than the trajectory resulting from guiding the missile directly to the target (and not to the collision point). As long as the moving states of the target does not change, the calculation is straightforward taking into account that the velocity of the missile and its direction can be adapted accordingly. A changing moving state is taken into account by repeating/updating the calculation. It is understood that for this, the motion state of the target should be known as accurately as possible - in particular for potential hypersonic targets. According to embodiments the collision point is determined so that the missile hits the target at the location of its weapon load (e.g. at the tip of missile). This shall eliminate the danger posed by the target (e.g. a chemical or atomic weapon load). The radar sensor of missile may be controlled to transmit radar signals only for the last adjustments need to the hit the desired portion of the target. According to embodiments, during the radar measurements utilized for the determination of the collision point, the radar sensor of the missile may only receive radar signals, but not transmit radar signals. This will prevent a detection of the missile based on radar transmissions. As result, the countermeasure of the target may only be directed to the air vehicles, but not to the missile.

According to the invention, the step of determining the collision point further comprises: performing monostatic radar measurements by at least one of the radar sensors to determine, for the target and/or for the missile, at least one of the following: a range, a velocity, an angle in azimuth, an angle in elevation, a position. These quantities may be measured from the at least one radar sensor and will determine the motion state of the target and/or the missile. The at least one air vehicle may, optionally, monitor by radar measurements the motion state or trajectory of the missile.

Optionally, the method further comprises: synchronizing the radar sensors with respect to at least one of the following parameters: time, frequency, location, transmission time, pulse length, bandwidth. As for the time, a synchronization in frequency and location shall include finding a common reference frame to calculate or to determine the parameters for each radar sensor. Therefore, the synchronization has the effect that the relative locations of all radar sensors (e.g. in all three coordinates) can be calculated or are known. This will allow coherent measurements. Same applies to the frequencies utilized for the radar signals which match or are known for all radar sensors or can be determined. Of course, different measurements may use different frequencies to suppress interferences as much as possible.

Each of the radar sensors is configured to provide a data link. The method further comprises: exchanging information via the data link between at least some of the radar sensors. The exchanged information may include one or more of the following: a modulation format, evaluated ranges, evaluated velocities, evaluated angles or other results of the radar measurements. The data link can also be used to synchronize (modulation) parameters such as transmission time, pulse length, bandwidth, frequency. Therefore, the different systems which may be operable to work with various formats/modulation may agree beforehand on a modulation to be used. The data link can be bidirectional (duplex) or may be operative only in one direction (e.g. broadcasting). For example, the missile may act as a central control unit collecting all available information and to draw the best conclusions therefrom. The data link may also be used to schedule the radar measurements.

According to the invention, the method further comprises: performing a sensor data fusion of one or multiple monostatic, bistatic, multi-static radar responses. The data link between the respective radar sensors may be utilized for this. The data fusion is performed in the at least one missile and includes a multilateration.

This multilateration may further improve the accuracy of the determination of the position and the trajectory of the target. In general, the number of measurements exceeded the number of unknown parameters or quantities, but the redundant measurements may eliminate errors or lower error margins.

The at least one illumination air vehicle and at least one missile may include one or more devices for electronic counter-countermeasures, ECCM. Then, optionally, the method further comprises: performing an electronic counter-countermeasure, ECCM, with respect to at least one of the following: a frequency, a time, a space, a bi-static operation, a multi-static operation to suppress or to neutralize jammers, interferences and/or decoys.

The ECCM may be performed by any of the at least one of the radar sensors from different directions so that the target may get confused from which direction it will be attacked. For this, it is of advantage that the illuminating devices are air vehicle that constantly change their position. Hence, it becomes difficult for the target to distinguish between the illuminating air vehicles and the actual missile. The ECCM may include transmitting fluctuating or varying signals in frequency, time or from different position, e.g. from two directions as bistatic or from more directions. For example, one of the air vehicles may trigger a countermeasure of the target, however, at a frequency which differs from frequencies utilized by the missile and, thus, the triggered countermeasure does not disturb the missile.

Optionally, the method further comprises: adapting at least one of the following parameters of utilized radar signals: a waveform, a number of channels, an integration time, a resolution. For example, the waveform can be adapted so that the lengths of the pulses is longer than the propagation time of the radar return signal. The resolution can also be changed by modifying the waveform. A high resolution is of advantage to ideally hit the tip of the target (or hit the target at the position of expected weapon load). In addition, the waveform can be adapted to a desired range profile and/or velocity profile (e.g. adjusting the frequency for the Doppler measurement).

According to embodiments, the adaptation is performed to achieve/increase high resolution measurements in range, angle velocity. In addition, with these adaptations different scattering centers of multiple targets may be resolved. For example, the target may launch decoys which should be differentiated from the actual target. Likewise, a target cluster may be dissolved to combat, for example, each target by separately. The high resolution achieved by the adapted radar parameter in combination with the fact that the radar sensor network is mobile (can change its position and orientation quickly) allows to detect reliably all targets and decoys separately.

Further embodiments relate to a radar sensor for a cooperative radar sensor system to combat a target. The radar sensor comprises a control unit configured to perform one of the above-mentioned methods. The radar sensor may cooperate with multiple radar sensors, each of which may be a respective radar sensor and all of them represent the cooperative radar sensor system. The cooperative radar sensor system may comprise at least one illumination air vehicle and at least one missile.

Optionally, the radar sensor or all radar sensors comprise(s) a multi-channel analog or a digital active electronically scanned array, AESA, with a mono-polarization and/or multi-polarization capability. This provides the advantage that the localization of the target is improved and less illumination air vehicles may be needed to monitor reliably the moving state of the target.

Further embodiments relate to a cooperative radar sensor system comprising at least one illumination air vehicle and at least one missile that is configured to follow a trajectory to combat a target, each of the at least one illumination air vehicle and at least one missile comprises a respective radar sensor forming a radar sensor as defined before.

Further embodiments relate to an air vehicle which comprises: a radar sensor as described before. The radar sensor is configured to illuminate a surveillance area and to perform bistatic radar measurements or multi-static radar measurements to evaluate with respect to the target at least one of the following: a range to the target, a velocity of the target, an azimuth angle, an elevation plane of the target.

According to further embodiments, the aircraft(s) may be configured to determine a position of the missile, or all radar sensors can determine their respective position(s).

Further embodiments relate to a missile which comprises: a radar sensor as described before. The radar sensor of the missile can be a radar seeker configured to "seek" their targets based on radar measurements and to guide the missile to the target.

Optionally, the missile comprises an electro-optical seeker and/or an infrared seeker. The radar seeker may be configured to be combined with the additional electro-optical and/or infrared seeker to improve a guidance towards the target.

Therefore, embodiments define a method for a vooperative operating of a radar seeker (e.g. radar sensor on the missile) with fire control radars (e.g. the radar sensor on the air vehicle or on ground).

Embodiments overcome at least some of the problems of conventional systems by utilizing, for example, at least one fighter aircraft as illuminator and at least one missile with an active radar seeker. All elements within this cooperative radar sensor network can serve as individual radar sensors. All of the radar sensors may be able to perform monostatic and/or bistatic and/or multi-static radar measurements. For example, a fighter platform can be utilized as a main illuminator which may be configured to change its location very quickly and thus can adapt or optimize an aspect angle with respect to the observed scenario.

Additionally or alternatively, the exemplary fighters and the radar seekers are synchronized with a high precision in time and/or frequency and/or modulation parameter and may share the individual radar measurements. According to embodiments, a bidirectional data link (upload and/or downlink) may be established between the radar sensors to exchange all useful information such as position information and status information.

In contrast to currently available radar seekers based on a monostatic radar principle, embodiments utilize radar sensors embedded in an overall radar sensor network that provides multi-sensor capabilities on a distributed system on several platforms and a data fusion.

Embodiments provide the advantage of providing a high target detection performance, a high target classification ability and a significantly approved target tracking accuracy. This enables an effective combating of targets in time-critical threat scenarios in an electromagnetically hostile environment.

The methods described above may also be computer-implemented methods. A person of skill in the art would readily recognize that various steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or a data processor.

Embodiments provide the particular advantage to improve the detection range of the target by a missile seeker and minimize the residual tracking accuracy to support the interceptor guidance. Using the bi- or multi-static approach the radar seeker can detect the target earlier and there is more time for the terminal guidance. Also, the transmitter (for radar signals) in the radar seeker may only utilized for the last few meters in approaching the target and can therefore be minimized by size, weight and prime power consumption. Since the transmitter of the seeker may be switched on very late, the probability by the target to detect the interceptor is very low and the probability of escape shrinks. The bi-static and multi-static approach improves also the detection of low observable targets.

### BRIEF DESCRIPTION OF THE DRAWINGS

Various embodiments of the present invention will be described in the following by way of examples only, and with respect to the accompanying drawings, in which:
- Fig. 1: shows a schematic flow chart for a method for operating a cooperative radar sensor system according to an embodiment.
- Fig. 2: depicts an embodiment of the cooperative radar sensor system.
- Fig. 3: depicts an embodiment of a missile (or an air vehicle) acting as a radar sensor in a cooperative radar sensor system.

### DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

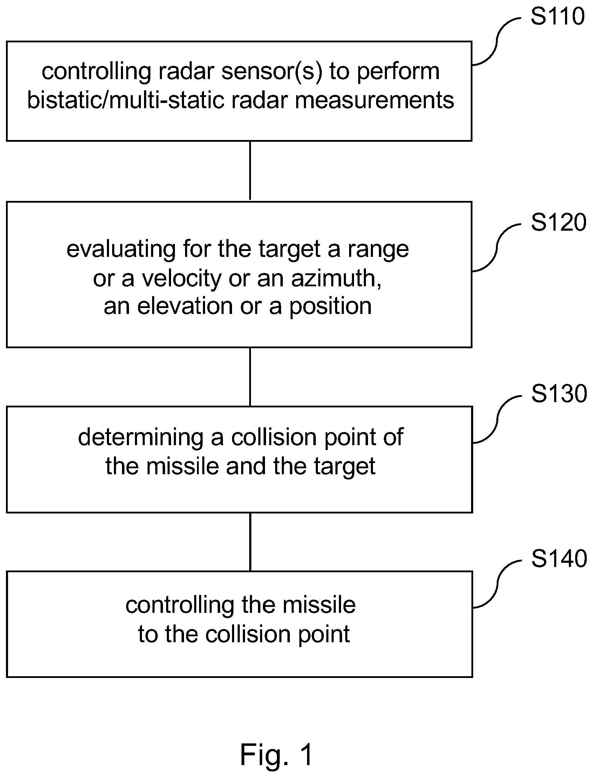

**Fig. 1** shows a schematic flow chart for a method for operating a cooperative radar sensor system according to an embodiment. The cooperative radar sensor system includes one or more air vehicles for illumination of a surveillance area and at least one missile that follows a trajectory to combat a target. The method comprising
- controlling S110 one or more of the sensor sensors to perform bistatic or multi-static radar measurements;
- evaluating S120, based on the radar measurements, for a reference point and the target at least one of the following: a range, a (relative or absolute) velocity, an azimuth angle, an elevation angle, wherein the reference point is one of the radar sensors or a fixed point;
- determining S130, based on the evaluation, a collision point of the missile and the target; and
- controlling S140 the missile to the collision point to hit the target at the collision point.

All functions described in the following for the cooperative radar sensor system can be implemented as further optional method steps. In addition, the order of the steps can be different - as long as the desired effect can be achieved. Furthermore, this method may also be implemented on a computer. Thus, embodiments relate also the computer-readable storage device with stored program code that is configured to execute the method steps when running on data processing unit.

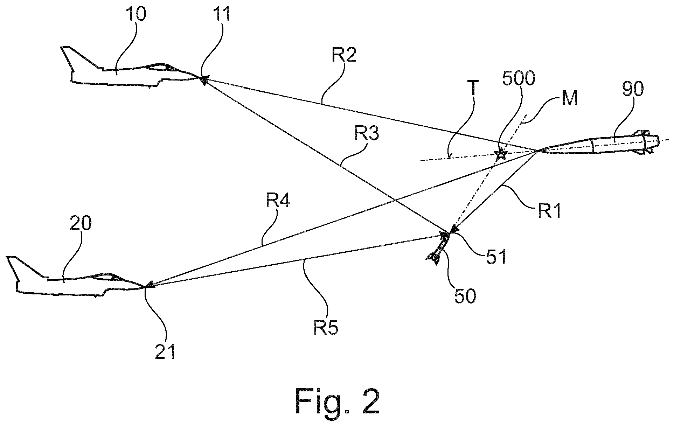

**Fig. 2** shows an embodiment of a cooperative radar sensor system, which includes multiple distributed radar sensors 11, 21, 51 on air vehicles 10, 20 and/or one or more missiles 50. In the depicted embodiment, the radar sensors 11, 21, 51 include a first radar sensor 11 on a first air vehicle 10, a second radar sensor 11 on a second air vehicle 20, and another radar sensor 51 on a missile 50. The first and second air vehicles 10, 20 are configured illuminate a surveillance area and the missile 50 is configured to combat a target 90 flying along a target trajectory T. The air vehicles 10, 20 may be fighter aircrafts or helicopters or drones whose position can be adjusted to achieve optimized results (e.g. a high resolution). The distributed radar sensors 11, 21, 51 are mobile radar sensors of a sensor network utilized to determine the target trajectory T or in general the moving state of the target 90. It is understood that embodiments are applicable also for multiple targets 90 that shall be tracked at the same time. As set forth below, more than two air vehicles 10, 20 might be used for this multi-target application.

The target 90 may be a hostile missile or air craft which moves along the trajectory T and shall be combatted with the missile 50 that follows a trajectory M. For this, the missile 50 may calculate a potential collision point 500 and may adjust its trajectory M to hit the target 90 at the calculated collision point 500. In order to calculate the collision point 500 correctly, there is a need to determine the velocity of the target 90 as well as its trajectory T with a high accuracy. Embodiments achieve this purpose by employing the sensor system with the missile 50 in combination with the air vehicle(s) 10, 20.

The first air vehicle 10 and the second air vehicle 20 are each configured to provide bistatic or monostatic radar measurements. Likewise, the radar system 51 of the missile 50 may be configured to perform bistatic and/or monostatic radar measurements. For example, the radar system 51 of the missile 50 may determine a first distance R1 from the missile 50 to the target 90. Similarly, the first radar system 11 may determine a second distance R2 from the first air vehicle 10 to the target 90. Likewise, the second radar system 21 may determine a forth distance R4 from the second air vehicle 20 to the target 90. Similarly, the system may be configured to determine a third distance R3 from the missile 50 to the first air vehicle 10 and/or a fifth distance R5 from the missile 50 to the second air vehicle 20. Theses distances R3, R5 may be determined by monostatic radar measurements between the missile 50 and the first air vehicle 10 and/or to the second air vehicle 20, which can be initiated from either side, from the missile 50 or from the first/second air vehicle 10, 20.

In addition to these monostatic radar measurements, the radar sensors 11, 21, 51 are controllable to perform bistatic or multistatic radar measurements. For example, bistatic radar measurements may be performed by using one or both of the air vehicles 10, 20 as illuminators to transmit radar signals which are received after reflection at the target 90 (and/or directly) by the radar sensor 51 of the missile 50 to determine a sum the second distance R2 and the first distance R1 (or a sum the forth distance R4 and the first distance R1, when the second air vehicle 20 is utilized as illuminator). Further bistatic measurements may be performed by utilizing the missile 50 as reflector, i.e. by transmitting radar signals from the first air vehicle 10 (or from the second air vehicle 20), which are received by the second air vehicle 20 (or by the first air vehicle 10) after reflections at the missile 50 (or directly without reflections).

Therefore, each radar sensor 11, 21, 51 of the radar cooperative radar sensor system as depicted in Fig. 2 is able to perform three monostatic radar measurements for the five distances R1, ... , R5 and the distance between the air vehicles 10, 20. In addition, multistatic radar measurements can be utilized to determine the following distance sums: R1+R2, R1+R4, R3+R5, R2+R4. These are more measurements than needed for the determination of three coordinates of the target 90. The redundancy may be used to improve the reliability and accuracy. In addition, the radar measurements may be utilized to monitor or determine also the trajectory M of the missile 50.

Moreover, the radar cooperative radar sensor system may be configured to repeat the measurements and thus can determine any motion of the target 90. The relative velocities between the target 90 and the radar sensors 11, 21, 51 can also be determined by measuring a Doppler shift in the reflected signal (frequency shift in the received signal compared to the transmitted signal). With the three relative velocities between the target 90 and the radar sensors 11, 21, 51 and the known velocities of the radar sensors 11, 21, 51 over ground, the absolute velocity over ground (its value and direction) of the target 90 can be determined.

Therefore, all unknown components of the target 90 (three position coordinates and three velocity components) can be can be determined by monostatic and multistatic measurements of the radar sensors 11, 21, 51. It is understood, the more air vehicle or the more missiles are present the more accurate the measurements can be performed. Therefore, according to further embodiments, more than two air vehicles are utilized. On the other hand, only a single air vehicle 10 and the missile 50 may be sufficient which can perform three measurements (one bistatic and two monostatic) to determine the three unknown position coordinates of the target 90. Its velocity may then be determined by repeating the measurements.

According to embodiments, the radar sensors 11, 21, 51 and/or the air vehicles 10, 20, and the missile 50 may provide a data link to exchange data with each other (e.g. using a particular modulation). This data link may further be utilized to synchronize the radar sensors 11, 21, 51 with a high precision in time and/or frequency and/or modulation parameter and/or locations. The data link may further be utilized to exchange information regarding the modulation format. For example, one or multiple of the following parameters may be exchanged: transmission time, pulse length, bandwidth, frequency. According to embodiments, the data link is bidirectional (upload and/or downlink) and may be established between all radar sensors to exchange all useful information such as position information and status information and the results of the radar measurement.

Furthermore, according to embodiments, the position of the air vehicles 10, 20 can be changed or can be adapted based on the particular trajectory T of the target 90. This provides the advantage that the aspect angle (angle between line of sight to the target 90 and its trajectory T) or other parameters can be optimized. When the target 90 changes its direction the air borne radar sensor system can quickly adapt its location and alignment to provide again an optimized coverage.

According to further embodiments, the radar sensors 11, 21, 51 may include multi-channel analog or digital active electronically scanned arrays (AESAs) with mono- and/or multi-polarization capability. These radar systems provide an angular resolution and thus improve further the accuracy of the radar measurement. In addition, since AESA radar systems provide an angular resolution less illuminating air vehicles 10, 20 may be needed to detect even multiple targets at the same time or sequentially. An advantage of using multi-polarisation is that the probability of a high radar cross section within both polarisations is higher as only one polarisation is utilized. For example, the reflection of signals in one polarization may better than with another polarization. Therefore, the detection probability is improved when the system is able to use both of them or can switch between both polarisations to obtain the highest radar cross section.

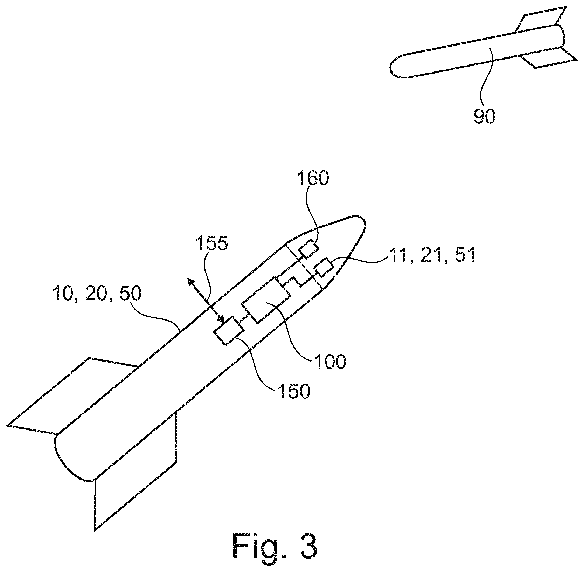

**Fig. 3** depict an embodiment for a missile 50 (or for an air vehicle 10, 20) with a radar sensor 11, 21, 51 which is configured to operate within the radar sensor system as described before. The exemplary missile 50 may further comprise an optical sensor 160 (e.g. an electro-optical and/or infrared seeker) and the radar sensor 11, 21, 51 may be designed as a radar seeker that cooperates with the additional electro-optical and/or infrared seeker 160 to guide the missile 50 to the collision point 500. The exemplary missile 50 comprises a transmitter and/or receiver 150 to enable a data link 155 to the other radar sensors 11, 21, 51 (not shown in Fig. 3). According to embodiments, the exemplary missile 50 comprises a control unit 100 to control the components such as the radar sensor(s) 11, 21, 51, transmitter/receiver 150 and the optical sensor 160 to provide the above-mentioned functions of the cooperative radar sensor system.

According to further embodiments, the radar sensor 11, 21, 51 is configured to adapt one or more of the following: a waveform (e.g. pulsed or continuous radar, length of pulses etc.), a number of channels, an integration time to achieve high-resolution measurements in range, angle (azimuth or elevation), velocity and to resolve different scattering centers of the target 90 and/or to resolve a cluster of targets 90 (e.g. additional ejected decoys) to be combated. Embodiments use this to determine an optimum aimpoint for combating.

According to further embodiments, the control unit 100 may be configured to control all or some of the radar sensor 11, 21, 51 to perform the bistatic or multi-static radar measurements and to evaluate one or more of the following: a range to the target 90 with respect to the missile 50 or with respect to another air vehicle 10, 20, a velocity of the target 90, an azimuth angle, an elevation angle of the target 90.

Each radar sensor 11, 21, 51 may provide a pre-processing to determine, for example, distances from monostatic measurements. Then, a data fusion can be performed at the control unit 100. Based on the radar measurements and the pre-processing, the control unit 100 may be configured to determine not only the trajectory of the target 90 but also to determine the collision point 500 with a high accuracy. It is understood that the collision point 500 depends not only on the trajectory T of the target 90 but also of the trajectory M and the velocity of the missile 50. Nevertheless, for a person skilled in the art this is a straight forward mathematical calculation. Finally, the control unit 100 may be configured to guide or direct the missile 50 to the collision point 500 (and not along the line of sight to the target 90).

Additionally, or alternatively, according to embodiments, the control unit 100 is configured to trigger effective and flexible electronic counter-countermeasures against jammers, interferences and decoys by utilizing the large degree of freedom within the radar sensor system.

Alternatively or in addition, the control unit 100 or a part thereof can be included in a remote server (e.g. a ground station) to provide a central control for all radar sensors 11, 21, 51. Therefore, according to embodiments, all information may also be gathered in a central processing platform (server) to perform sensor data fusion at a remote location with high computational power. Therefore, due to the large amount of individual radar measurements and the high degree of cooperation, it becomes possible to significantly improve the determination of a trajectory of the target 90 to be combated - especially in time-critical scenarios.

According to further embodiments, the cooperative radar sensor system may be completely air-borne, i.e. the system comprises only at least one fighter aircraft 10, 20 and at least one missile 50 with an active radar seeker 51, all serving as individual radar sensors within the sensor system and all being able to perform bi-static and multi-static radar measurements, i.e. to measure the distances R1+R4, R2+R4, and to evaluate range, velocity, and angle in azimuth and elevation plane of the target 90 to be combated. Therefore, according to embodiments, there may be no ground-based or stationary components or installations. This provides the advantage that the system can flexibly be set up at any location, because the whole sensor system is mobile and movable.

According to further embodiments, the radar seeker 51 and/or the fighter aircraft 10, 20 within the cooperative radar sensor system is further configured to perform monostatic radar measurements, i.e. to measure the distances R1, R2 or R4, and to evaluate range, velocity, and angle in azimuth and elevation plane of the target to be combated.

According to further embodiments, the radar seeker 51 and/or the fighter aircraft 10, 20 within the cooperative radar sensor system is composed of multi-channel analog or digital active electronically scanned arrays (AESAs) with mono- and/or multi-polarization capability.

According to further embodiments, the radar seeker 51 and/or the fighter aircraft 10, 20 within the cooperative radar sensor system have the capability that the sensors 11, 21, 51 synchronize one or multiple of the following parameters: time, frequency, and location with each other by means of the data link.

According to further embodiments, the radar seeker 51 and/or the fighter aircraft 10, 20 within the cooperative radar sensor system are configured to exchange information regarding the modulation format and to synchronize one or multiple of the parameters: transmission time, pulse length, bandwidth, frequency.

According to further embodiments, the radar seeker 51 and/or the fighter aircraft 10, 20 within the cooperative radar sensor system are configured to perform electronic counter-counter measures (ECCM) with the degree of freedom in: frequency, time, space and bi/multistatic operation to suppress jammers, interference and/or decoys.

According to further embodiments, the radar seeker 51 and the fighter aircrafts 10, 20 within the cooperative radar sensor system are configured to perform sensor data fusion of one or multiple monostatic, bistatic and multi-static radar responses provided via the datalink 155 and to combine the evaluated ranges, velocities, and angle, e.g., within the radar seeker 51 by means of multilateration. The goal of the data fusion is to improve the accuracy of the determined trajectory of the target 90 to be combated in a time-critical scenario, e.g., when the observation time of the target 90 is small such as for fast-moving hypersonic missiles. Therefore, a data fusion within the radar seeker 51 is beneficial for these time-critical scenarios.

According to further embodiments, the fighter aircrafts 10, 20 within the cooperative radar sensor system are configured to measure and to track the trajectory of the missile 50 with radar seeker 51, i.e. to measure the distances R3, R5, R3+R5, and to transfer the obtained information via the data link towards the missile 50 for data fusion. This information is also usable to further improve the location and thus the trajectory of the missile 50 towards the target 90.

The missile 50 may comprise an additional electro-optical and/or infrared seeker 160 and, according to further embodiments, the radar seeker 51 can be combined with the additional electro-optical and/or infrared seeker 160.

According to further embodiments, the radar seeker 51 and/or the fighter aircrafts 10, 20 are configured to adapt one or more of the following: a waveform, a number of channels, an integration time to achieve high-resolution measurements in range, angle, velocity and to resolve the different scattering centers of the target and/or resolve a cluster of targets 90 (e.g. additional ejected decoys) to be combated. This can be used to determine the optimum aimpoint for combating.

One or more embodiments provide at the following advantages: A significant improvement for a target detection performance, a detection robustness, and a target tracking accuracy is achieved. Embodiments are specifically beneficial in time-critical scenarios such as for hypersonic threats where a highly accurate determination of the properties of the target is needed for an efficient combat. Due to the bistatic or multi-static operation, the radiofrequency transmission unit of the radar seeker can be reduced in power, weight and volume which have a positive effect on an interceptor design.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### List of reference signs

- 10, 20: air vehicles (illuminators)
- 11, 21, 51: radar sensors (radar nodes)
- 50: missile
- 90: target to be combatted
- 100: control unit
- 150: data transmitter/receiver
- 155: data link
- 160: optical sensor (electro-optical seeker, infrared seeker)
- 500: collision point
- T: trajectory of the target
- M: trajectory of the missile

## Claims

1. A method for operating a cooperative radar sensor system with at least one illumination air vehicle (10, 20) and at least one missile (50) that is configured to follow a trajectory (M) to combat a target (90), each of the at least one illumination air vehicle (10, 20) and the at least one missile (50) comprises a respective radar sensor (11, 21, 51), wherein each of the radar sensors (11, 21, 51) comprises a transmitter and/or receiver (150) to provide a data link (155), the method comprising:
controlling (S110) all of the radar sensors (11, 21, 51) to perform a monostatic radar measurement and to perform a bistatic or multi-static radar measurements;
evaluating (S120), based on the radar measurements, for a reference point and the target (90) at least one of the following: a range, a velocity, an azimuth angle, an elevation angle, a position, wherein the reference point is a location of one of the radar sensors (11, 21, 51) or a fixed point; determining (S130), based on the evaluation, a collision point (500) of the missile (50) and the target (90);
controlling (S140) the missile (50) to the collision point (500) to hit the target (90) at the collision point (500);
exchanging information via the data link (150) between at least some of the radar sensors (11, 21, 51), the exchanged information include one or more of the following: a modulation format, evaluated ranges, evaluated velocities, evaluated angles ; and
performing a sensor data fusion of multiple monostatic and bistatic radar responses in the missile including a multilateration.

2. The method according to claim 1, wherein the step of determining (S130) the collision point (500) further comprises:
performing monostatic radar measurements (R1, R2, R4) by at least one of the radar sensors (11, 21, 51) to determine, for the target (90) and/or for the missile (50), at least one of the following: a range, a velocity, an angle in azimuth, an angle in elevation, a position.

3. The method according to any one of the preceding claims, further comprising:
synchronizing the radar sensors (11, 21, 51) with respect to at least one of the following parameters: time, frequency, location, transmission time, pulse length, bandwidth.

4. The method according to any one of the preceding claims, wherein the at least one illumination air vehicle (10, 20) and at least one missile (50) include at least one device for electronic counter-countermeasures, ECCM, the method further comprising:
performing an electronic counter-countermeasure, ECCM, with respect to at least one of the following: a frequency, a time, a space, a bi-static operation, a multi-static operation to suppress or to neutralize jammers, interferences and/or decoys.

5. The method according to any one of the preceding claims, further comprising:
adapting at least one of the following parameters of utilized radar signals:
a waveform, a number of channels, an integration time, a resolution.

6. A cooperative radar sensor system comprising at least one illumination air vehicle (10, 20) and at least one missile (50) that is configured to follow a trajectory (M) to combat a target (90), each of the at least one illumination air vehicle (10, 20) and at least one missile (50) comprises a respective radar sensor (11, 21, 51) configured to perform in combination the method according to any one of claims 1 to 5.

7. A radar sensor (11, 21, 51) for a cooperative radar sensor system according to claim 6, the radar sensor (11, 21, 51) being configured to be included in the at least one illumination air vehicle (10, 20) or in the at least one missile (50) as the respective radar sensor (11, 21, 51).

8. The radar sensor (11, 21, 51) according to claim 7, the radar sensor (11, 21, 51) comprising a multi-channel analog or a digital active electronically scanned array, AESA, with a mono-polarization and/or multi-polarization capability.

9. An air vehicle (10, 20) comprising:
a radar sensor (11, 21) according to claim 7 or claim 8,
wherein the radar sensor (11, 21) is configured to illuminate a surveillance area and to perform bistatic radar measurements or multi-static radar measurements to evaluate with respect to the target (90) at least one of the following: a range to the target (90), a velocity of the target (90), an azimuth angle, an elevation plane of the target (90).

10. A missile (50) comprising:
a radar sensor (51) according to claim 7 or claim 8,

11. The missile (50) according to claim 11, wherein the radar sensor (51) is configured as a radar seeker, the missile (50) further comprising:
an electro-optical seeker and/or infrared seeker (160), wherein the radar seeker (51) is configured to be combined with the additional electro-optical and/or infrared seeker to improve a guidance towards the target (90).

## Patentansprüche

1. Verfahren zum Betreiben eines kooperativen Radarsensorsystems mit mindestens einem Beleuchtungsluftfahrzeug (10, 20) und mindestens einem Flugkörper (50), der konfiguriert ist, um einer Flugbahn (M) zu folgen, um ein Ziel (90) zu bekämpfen, wobei jedes des mindestens einen Beleuchtungsluftfahrzeugs (10, 20) und jeder des mindestens einen Flugkörpers (50) einen jeweiligen Radarsensor (11, 21, 51) umfasst, wobei jeder der Radarsensoren (11, 21, 51) einen Sender und/oder Empfänger (150) umfasst, um eine Datenverbindung (155) bereitzustellen, das Verfahren umfassend:
Steuern (S110) aller der Radarsensoren (11, 21, 51), um eine monostatische Radarmessung durchzuführen und um bistatische oder multistatische Radarmessungen durchzuführen;
Auswerten (S120), basierend auf den Radarmessungen, für einen Referenzpunkt und das Ziel (90) mindestens eines der Folgenden: einer Entfernung, einer Geschwindigkeit, eines Azimutwinkels, eines Elevationswinkels, einer Position, wobei der Referenzpunkt ein Ort eines der Radarsensoren (11, 21, 51) oder ein fester Punkt ist; Bestimmen (S130), basierend auf der Auswertung, eines Kollisionspunkts (500) des Flugkörpers (50) und des Ziels (90);
Steuern (S140) des Flugkörpers (50) zu dem Kollisionspunkt (500), um das Ziel (90) an dem Kollisionspunkt (500) zu treffen;
Austauschen von Informationen über die Datenverbindung (150) zwischen mindestens einigen der Radarsensoren (11, 21, 51), wobei die ausgetauschten Informationen eines oder mehrere der Folgenden einschließen: ein Modulationsformat, ausgewertete Entfernungen, ausgewertete Geschwindigkeiten, ausgewertete Winkel; und
Durchführen einer Sensordatenfusion vielfacher monostatischer und bistatischer Radarantworten in dem Flugkörper einschließlich einer Multilateration.

2. Verfahren nach Anspruch 1, wobei der Schritt des Bestimmens (S130) des Kollisionspunkts (500) ferner umfasst:
Durchführen monostatischer Radarmessungen (R₁, R₂, R₄) durch mindestens einen der Radarsensoren (11, 21, 51), um für das Ziel (90) und/oder für den Flugkörper (50) mindestens eines der Folgenden zu bestimmen: eine Entfernung, eine Geschwindigkeit, einen Winkel im Azimut, einen Winkel in der Elevation, eine Position.

3. Verfahren nach einem der vorstehenden Ansprüche, ferner umfassend:
Synchronisieren der Radarsensoren (11, 21, 51) in Bezug auf mindestens einen der folgenden Parameter: Zeit, Frequenz, Ort, Sendezeit, Impulslänge, Bandbreite.

4. Verfahren nach einem der vorstehenden Ansprüche, wobei das mindestens eine Beleuchtungsluftfahrzeug (10, 20) und mindestens ein Flugkörper (50) mindestens eine Vorrichtung für elektronische Gegen-Gegenmaßnahmen, ECCM, einschließen, das Verfahren ferner umfassend:
Durchführen einer elektronischen Gegen-Gegenmaßnahme, ECCM, in Bezug auf mindestens eines der Folgenden: eine Frequenz, eine Zeit, einen Raum, einen bistatischen Betrieb, einen multistatischen Betrieb, um Störsender, Interferenzen und/oder Täuschkörper zu unterdrücken oder neutralisieren.

5. Verfahren nach einem der vorstehenden Ansprüche, ferner umfassend:
Anpassen mindestens eines der folgenden Parameter verwendeter Radarsignale: einer Wellenform, einer Anzahl von Kanälen, einer Integrationszeit, einer Auflösung.

6. Kooperatives Radarsensorsystem, umfassend mindestens ein Beleuchtungsluftfahrzeug (10, 20) und mindestens einen Flugkörper (50), der konfiguriert ist, um einer Flugbahn (M) zu folgen, um ein Ziel (90) zu bekämpfen, wobei jedes des mindestens einen Beleuchtungsluftfahrzeug (10, 20) und jeder des mindestens einen Flugkörpers (50) einen jeweiligen Radarsensor (11, 21, 51) umfasst, der konfiguriert ist, um in Kombination das Verfahren nach einem der Ansprüche 1 bis 5 durchzuführen.

7. Radarsensor (11, 21, 51) für ein kooperatives Radarsensorsystem nach Anspruch 6, wobei der Radarsensor (11, 21, 51) konfiguriert ist, um in dem mindestens einen Beleuchtungsluftfahrzeug (10, 20) oder in dem mindestens einen Flugkörper (50) als der jeweilige Radarsensor (11, 21, 51) eingeschlossen zu sein.

8. Radarsensor (11, 21, 51) nach Anspruch 7, der Radarsensor (11, 21, 51) umfassend ein multikanaliges analoges oder ein digitales aktives elektronisch gescanntes Array, AESA, mit einer Monopolarisations- und/oder Multipolarisationsfähigkeit.

9. Luftfahrzeug (10, 20), umfassend:
einen Radarsensor (11, 21) nach Anspruch 7 oder 8,
wobei der Radarsensor (11, 21) konfiguriert ist, um einen Überwachungsbereich auszuleuchten und bistatische Radarmessungen oder multistatische Radarmessungen durchzuführen, um in Bezug auf das Ziel (90) mindestens eines der Folgenden auszuwerten: eine Entfernung zum Ziel (90), eine Geschwindigkeit des Ziels (90), einen Azimutwinkel, eine Elevationsebene des Ziels (90).

10. Flugkörper (50), umfassend:
einen Radarsensor nach Anspruch 7 oder 8.

11. Flugkörper (50) nach Anspruch 11, wobei der Radarsensor (51) als Radarsuchkopf konfiguriert ist, der Flugkörper (50) ferner umfassend:
einen elektrooptischen Suchkopf und/oder Infrarotsuchkopf (160), wobei der Radarsuchkopf (51) konfiguriert ist, um mit dem zusätzlichen elektrooptischen und/oder Infrarotsuchkopf kombiniert zu werden, um eine Führung zu dem Ziel (90) zu verbessern.

## Revendications

1. Procédé permettant d'exploiter un système de capteurs radar coopératif avec au moins un véhicule aérien d'éclairage (10, 20) et au moins un missile (50) qui est configuré pour suivre une trajectoire (M) afin de combattre une cible (90), chacun de l'au moins un véhicule aérien d'éclairage (10, 20) et de l'au moins un missile (50) comprend un capteur radar (11, 21, 51) respectif, dans lequel chacun des capteurs radar (11, 21, 51) comprend un émetteur et/ou un récepteur (150) pour fournir une liaison de données (155), le procédé comprenant :
la commande (S110) de tous les capteurs radar (11, 21, 51) pour réaliser une mesure radar monostatique et pour réaliser des mesures radar bistatiques ou multistatiques ;
l'évaluation (S120), sur la base des mesures radar, pour un point de référence et la cible (90), d'au moins l'un parmi les éléments suivants : une portée, une vitesse, un angle d'azimut, un angle d'élévation, une position, dans lequel le point de référence est un emplacement de l'un des capteurs radar (11, 21, 51) ou un point fixe ; la détermination (S130), sur la base de l'évaluation, d'un point de collision (500) du missile (50) et de la cible (90) ;
la commande (S140) du missile (50) au point de collision (500) pour frapper la cible (90) au niveau du point de collision (500) ;
l'échange d'informations par l'intermédiaire de la liaison de données (150) entre au moins certains des capteurs radar (11, 21, 51), les informations échangées comportent un ou plusieurs des éléments suivants : un format de modulation, des plages évaluées, des vitesses évaluées, des angles évalués ; et
la réalisation d'une fusion de données de capteurs de multiples réponses radar monostatiques et bistatiques dans le missile, y compris une multilatération.

2. Procédé selon la revendication 1, dans lequel l'étape de détermination (S130) du point de collision (500) consiste en outre à :
réaliser des mesures radar monostatiques (R₁, R₂, R₄) par au moins l'un parmi les capteurs radar (11, 21, 51) afin de déterminer, pour la cible (90) et/ou pour le missile (50), au moins l'un parmi les éléments suivants : une portée, une vitesse, un angle en azimut, un angle en élévation, une position.

3. Procédé selon l'une quelconque des revendications précédentes, comprenant en outre :
la synchronisation des capteurs radar (11, 21, 51) par rapport à au moins l'un parmi les paramètres suivants : temps, fréquence, emplacement, temps de transmission, longueur d'impulsion, largeur de bande.

4. Procédé selon l'une quelconque des revendications précédentes, dans lequel l'au moins un véhicule aérien d'éclairage (10, 20) et l'au moins un missile (50) comportent au moins un dispositif de contre-contre-mesures électroniques, ECCM, le procédé comprenant en outre :
la réalisation d'une contre-contre-mesure électronique, ECCM, par rapport à au moins l'un parmi les éléments suivants : une fréquence, un temps, un espace, un fonctionnement bistatique, un fonctionnement multistatique pour supprimer ou neutraliser des brouilleurs, des interférences et/ou des leurres.

5. Procédé selon l'une quelconque des revendications précédentes, comprenant en outre :
l'adaptation d'au moins l'un parmi les paramètres suivants de signaux radar utilisés : une forme d'onde, un nombre de canaux, un temps d'intégration, une résolution.

6. Système de capteurs radar coopératif comprenant au moins un véhicule aérien d'éclairage (10, 20) et au moins un missile (50) qui est configuré pour suivre une trajectoire (M) pour combattre une cible (90), chacun de l'au moins un véhicule aérien d'éclairage (10, 20) et d'au moins un missile (50) comprend un capteur radar (11, 21, 51) respectif configuré pour réaliser en combinaison le procédé selon l'une quelconque des revendications 1 à 5.

7. Capteur radar (11, 21, 51) destiné à un système de capteurs radar coopératif selon la revendication 6, le capteur radar (11, 21, 51) étant configuré pour être inclus dans l'au moins un véhicule aérien d'éclairage (10, 20) ou dans l'au moins un missile (50) en tant que capteur radar (11, 21, 51) respectif.

8. Capteur radar (11, 21, 51) selon la revendication 7, le capteur radar (11, 21, 51) comprenant un réseau à balayage électronique actif analogique ou numérique, AESA, à canaux multiples, avec une capacité de monopolarisation et/ou de multipolarisation.

9. Véhicule aérien (10, 20) comprenant :
un capteur radar (11, 21) selon la revendication 7 ou la revendication 8,
dans lequel le capteur radar (11, 21) est configuré pour éclairer une zone de surveillance et pour réaliser des mesures radar bistatiques ou des mesures radar multistatiques afin d'évaluer, par rapport à la cible (90), au moins l'un parmi les éléments suivants : une portée par rapport à la cible (90), une vitesse de la cible (90), un angle d'azimut, un plan d'élévation de la cible (90).

10. Missile (50) comprenant :
un capteur radar (51) selon la revendication 7 ou la revendication 8.

11. Missile (50) selon la revendication 11, dans lequel le capteur radar (51) est configuré comme un autodirecteur radar, le missile (50) comprenant en outre :
un autodirecteur électro-optique et/ou un autodirecteur infrarouge (160), dans lequel l'autodirecteur radar (51) est configuré pour être combiné avec l'autodirecteur électro-optique et/ou infrarouge supplémentaire afin d'améliorer un guidage vers la cible (90).
